# EUROPÄISCHE PATENTSCHRIFT

(11) **EP 1 082 378 B1**
(45) Veröffentlichungstag und Bekanntmachung des Hinweises auf die Patenterteilung: **14.07.2004**
(21) Anmeldenummer: 99953342.5
(22) Anmeldetag: 14.05.1999
(51) Int. Cl.: C08J 3/24, C08L 19/00, C08K 5/098, C08L 13/00

(54) **KATALYSATOREN FÜR DIE HERSTELLUNG KALT ODER WARM VERNETZBARER MASSEN**
CATALYSTS FOR PRODUCING COLD OR HOT CROSS-LINKABLE MASSES
CATALYSEURS POUR LA PRODUCTION DE MATIERES RETICULABLES A FROID OU A CHAUD

(30) Priorität: 23.05.1998 DE 19823184
(43) Veröffentlichungstag der Anmeldung: 14.03.2001
(73) Patentinhaber: Henkel Teroson GmbH, 69123 Heidelberg (DE); Th. Goldschmidt AG, 45127 Essen (DE)
(72) Erfinder: BORN, Peter, D-69207 Sandhausen (DE); WEINBRECHT, Uwe, D-68199 Mannheim (DE); GUHL, Dieter, D-67346 Speyer (DE)
(74) Vertreter: Mathes, Nikolaus, Dr.
(86) Internationale Anmeldenummer: PCT/EP1999/003333
(87) Internationale Veröffentlichungsnummer: WO 1999/061515

(56) Entgegenhaltungen:
- EP-A- 0 356 715
- GB-A- 1 083 090
- US-A- 4 604 420

## Beschreibung

Die Erfindung betrifft Katalysatoren für die Herstellung kalt oder warm vernetzbarer Massen.

In der Wärme und in der Kälte vernetzbare Massen sind Stand der Technik und ihr Einsatz als Fugendichtungsmassen, Klebstoffe, Kitte sowie Spachtelmassen ist bekannt. Üblicherweise bestehen Massen für die genannten Anwendungszwecke aus einer Kombination von funktionalisierten Bindemitteln, Vernetzungsmittel und Katalysator zur Beschleunigung der Vernetzungsreaktion. Zusätzlich können noch Modifizierungsmittel, wie Füllstoffe, Weichmacher, Farbstoffe und ähnliches, zugesetzt werden.

Bekannt sind beispielsweise hydroxylgruppenterminierte Polymerisate, die mit Diisocyanaten als Vernetzungsmittel und einem üblichen Katalysator vernetzt werden. Alternativ kann auch ein Tetraalkylsilicat als Vernetzungsmittel eingesetzt werden, wobei dann Zinn(II)octoat als Katalysator eingesetzt wird (US-A-3 624 014).

EP 0 356 715 B1 betrifft flüssige oder streichfähige vulkanisierbare Kautschukmischungen auf Basis von mehreren Polymeren, von denen zumindest eines olefinisch ungesättigt ist, dadurch gekennzeichnet, daß sie enthalten
- 30 bis 70 Gew.-Teile eines Polymeren A mit im Mittel mindestens 2 Hydroxylgruppen pro Makromolekül
- 70 bis 30 Gew.-Teile eines mit A verträglichen Polymeren B mit im Mittel mindestens 2 Carbonsäure- und/oder Carbonsäureanhydridgruppen oder zumindest einer Carbonsäure und einer Carbonsäureanhydridgruppe pro Molekül
- 10 bis 120 Gew.-Teile Vulkanisationshifsmittel und gewünschtenfalls Füllstoffe und/oder Hilfsstoffe und
- gewünschtenfalls 0,1 bis 5 Gew.-Teile Veresterungskatalysatoren,
wobei zumindest eines der Polymeren A oder B unter üblichen Reaktionsbedingungen bei erhöhten Temperaturen über seine olefinischen Doppelbindungen vulkanisierbar ist und wobei nur eine der Komponenten A oder B sich von einem vulkanisierbaren Polydien ableitet, die andere aber ein damit verträgliches Polyamid, einen Polyester oder ein Copolymerisat jeweils mit OH- und/oder Carbonsaure- oder Carbonsäureanhydridgruppen darstellt, oder die Polymeren A und B sich von Polydienen oder deren Copolymeren ableiten.

In der EP 0 181 441 A1 wird eine in der Wärme vernetzbare Masse sowie ein Verfahren zur Herstellung von in der Kälte vernetzenden Masse beschrieben, welches aus einer Kombination zweier funktionalisierter Bindemittel besteht, deren Kaltvernetzung durch Zusatz eines Katalysators hervorgerufen wird. Bei dem Bindemittel I handelt es sich um ein Polymerisat auf Basis eines Homo-Butadiens, welches in geeigneter Weise mit Hydroxylgruppen funktionalisiert wurde. Bindemittel II ist ebenfalls ein Polymerisat auf Basis eines Homo- oder Co-Butadiens, das beispielsweise mit Bernsteinsäureanhydrid-Gruppen versehen ist. Die Polymerisate können auf vielfältige Weise modifiziert sein. Für die eigentliche Vernetzungsreaktion ist jedoch nur die Reaktion der Hydroxylgruppen mit der Säureanhydridgruppe von Bedeutung. Alle anderen Modifikationen dienen im weitesten Sinne der Modifikation der Produkteigenschaften.

EP 0 181 441 A1 lehrt, daß die Kaltvernetzung solcher Massen bevorzugt durch stickstoffhaltige Katalysatoren oder Sulfonsäuren katalysiert werden kann.

Als stickstoffhaltige Katalysatoren sind beispielsweise beschrieben: Pyridin, N-Methylimidazol, 3-Amino-2,4-dimethylpentan, Di-(2-ethylhexyl)amin. Als Beispiel für eine geeignete Sulfonsäure wird die p-Toluolsulfonsäure genannt.

Die vorgenannten Massen finden unter anderem Einsatz in heißhärtenden Klebstoffen für Metallteile oder für Bauteile, die im Verlauf ihrer Verarbeitung noch thermischen Behandlungsschritten unterworfen sind. Die Katalysatoren nach dem Stand der Technik weisen für diese Anwendungszwecke Nachteile auf. Sollten Metallteile mittels solcher Massen verklebt werden, führt die Sulfonsäure selbst in katalytischen Mengen zu einer erhöhten Korrosionsrate an den benetzten Stellen und damit zu einer geringeren Stabilität. Durch Verwendung von Aminen kann dieser Nachteil zwar umgangen werden. Ist im weiteren Bearbeitungsablauf jedoch thermische Behandlung notwendig, weisen auch die Amine Nachteile auf. Bei den für die Kaltvernetzung notwendigen Mengen (ca. 1% bezogen auf die gesamte Bindemittelmenge) kommt es bei erhöhter Temperatur zu einem Ausdünsten der flüchtigen Aminverbindungen und damit zu einer erheblichen Geruchsbelästigung bei der Verarbeitung.

Aufgabe der vorliegenden Erfindung ist es, Massen mit einem Katalysator bereitzustellen, der über eine ähnliche katalytische Aktivität wie die bereits bekannten Verbindungen verfügt, jedoch gegenüber Metallteilen nicht korrosiv ist und bei der Anwendung zu keiner Geruchsbelästigung führt.

Die vorgenannte Aufgabe wird gelöst durch kalt oder warmvernetzende Massen, die primäre und/oder sekundäre hydroxylgruppentragende Polymerisate auf Basis von 1,3 Butadien neben carbonsäuregruppentragenden Polymerisaten auf Basis von 1,3-Polybutadien und üblichen, die Vernetzung nicht katalysierenden Zusatzstoffen enthalten und zusätzlich Katalysatoren zur Vernetzung dieser Massen enthalten auf der Basis von Alkalimetallsalzen von gradkettigen oder verzweigten, gesättigten, einfach- oder mehrfachungesättigten, aliphatischen und/oder aromatischen Carbonsäuren nativen und/oder synthetischen Ursprungs.

Ausgangpunkt zur Lösung der Aufgabenstellung war die Überlegung, daß Carboxylate zur Katalyse der Reaktion zwischen einer Anhydrid- und Alkoholfunktion geeignete Substanzen sein könnten, da ihre katalytische Wirkung bei Veresterungsreaktionen bekannt ist. In der Regel werden Veresterungsreaktionen bei Temperaturen oberhalb Raumtemperatur durchgeführt, die je nach Estertyp von ca 80°C bis zu 280°C reichen können. Eine Katalyse bei Raumtemperatur ist hingegen nicht bekannt.

Geeignet sind alle Alkalisalze von aliphatischen, aromatischen Carbonsauren synthetischen oder natürlichen Ursprungs, wobei jeweils alkylund/oder arylsubstituierte Verbindungen sowie deren Mischungen eingeschlossen sind. Besonders bevorzugt sind diejenigen Salze, die mit der Polymermatrix verträglich sind und homogen eingearbeitet werden können, was inbesondere bei aliphatischen Carbonsäureresten einer Kettenlänge von C₃ bis C₂₂ der Fall ist. Sofern notwendig, können die Salze auch als Lösung in einem inerten Lösemittel eingesetzt werden. Verbindungen dieser Art verhalten sich gegenüber gängigen Metallen und ihren Legierungen nicht korrosiv. Sie sind ferner weitgehend geruchlos und haben eine so geringe Flüchtigkeit, daß sie auch bei Hitzeeinwirkung nicht zu einer geruchsintensiven Ausdünstung aus dem Polymer führen.

Werden Testbleche aus Normalstahl mit einer Masse aus Alkalicarboxylat vemetzten Massen beschichtet und bei 80°C unter Einwirkung von Luftfeuchtigkeit mehrere Stunden gelagert, kann weder eine geruchliche Belastung noch eine Anfangskorrosion der Bleche festgestellt werden, wie sie zum Beispiel bei der katalytischen Einwirkung freier Säure beobachtet wird.

Die katalytische Aktivität der Vemetzungsreaktion bei Raumtemperatur zwischen dem hydroxyfunktionellen Polymer und dem säureanhydridfunktionellem Polymer kann durch die eingesetzte Konzentration des Alkalicaboxylates geregelt werden. Für die angestrebte Verarbeitungszeit von ca. 1 Stunde bis zur Ausbildung einer nicht mehr fließfähigen, an der Oberfläche nichtklebrigen Masse, ist eine Konzentration von 0,5 bis 2,0 Teile pro 100 Teile Polymermischung, bevorzugt von 0,7 bis 1,5 Teile, ausreichend Die nach dem Stand der Technik bekannten Sulfonsäuren oder Amine werden zur Erzielung des gleichen Eigenschaftenbildes ebenfalls in einer Konzentration von etwa 1 Teil auf 100 Teile Polymermischung eingesetzt.
Die Eignung von Alkalicarboxylaten für die erfindungsgemäße Verwendung ist insofern überraschend, als vergleichbare Carboxylate mehrwertiger Metallionen, wie z.B. des Zinks, des Calciums oder des Wismuts, keine ausreichende katalytische Aktivität bei Raumtemperatur aufweisen.

Die folgenden Beispiele belegen die erfindungsgemäße Wirkung der Alkalicarboxylate im Vergleich zu anderen Substanzen näher.

### Beispiele:

### Beispiel 1:

In einem beschichteten Papierbecher werden mittels Mizerscheibe innerhalb von 2 Minuten bei Raumtemperatur innig vermischt:
50,0 g Maleinsäureaddukt eines niedermolekularen 1,4-cis Polybutadiens mit einer mittleren Molmasse von 1800 bis 2400 und einer Säurezahl von 80 bis 95 mg KOH/g mit
50,0 g Polybutadienol mit einer OH-Zahl von 0,83 meq/g und
1,0g Kalium-2-ethylhexanoat, gelöst in Diethylenglycoldimethylether.

Die Mischung wird auf ein Substrat ausgegossen und auf ihre Aushärtung bei 20°C nach einer Stunde geprüft.

Nach einer Stunde weist die Masse folgende Eigenschaften auf:
klebfreie Oberfläche,
zeigt keine Fließfähigkeit.
zieht keine Fäden.

### Beispiele 2 bis 6:

Analog zum Beispiel 1 werden vermischt:
50,0 g Maleinsäureaddukt des 1,4-cis Polybutadiens,
50,0 g Polybutadienol und
1,0 g Katalysator (gemäß Tabelle 1).
Die Ergebnisse sind in Tabelle 1 festgehalten

**Tabelle 1:**

| Beispiel Nr. | Katalysator | Eigenschaften Oberfläche | Fließfähigkeit | Fadenzug |
|---|---|---|---|---|
| 2 | Kalium-2-ethyl-hexanoat | klebfrei | keine | keiner |
| 3 | Kalium-noctanoat | klebfrei | keine | keiner |
| 4 | Kaliumisooctoat | klebfrei | keine | keiner |
| 5 | Kaliumneodecanoat | klebfrei | keine | keiner |
| 6 | Natriumisooctoat | klebfrei | keine | sehr gering |

### Vergleichsbeispiele 1 bis 6

Analog zu Beispiel 1 werden die Katalysatoren variiert. Die Ergebnisse sind in Tabelle 2 festgehalten:

**Tabelle 2:**

| Vergleichsbeispiel | Katalysator | Eigenschaften Oberfläche | Fließfähigkeit | Fadenzug |
|---|---|---|---|---|
| 1 | Dioctyl-amin | klebfrei | keine | keiner |
| 2 | p-Toluolsulfon-säure | klebfrei | keine | keiner |
| 3 | N,N,N',N'-Tetramethylen-diamin | klebfrei | keine | keiner |
| 4 | Zink-2-ethyl-hexanoat | klebrig | geringe Viskosität | ja |
| 5 | Calcium-octoat | klebrig | geringe Viskosität | ja |
| 6 | Wismutneodecanoat | klebrig | geringe Viskosität | ja |

## Patentansprüche

1. Kalt oder warm vemetzende Massen, enthaltend primäre und/oder sekundäre hydroxylgruppentragende Polymerisate auf Basis von 1,3-Butadien neben carbonsäuregruppentragenden Polymerisaten auf Basis von 1,3-Butadien sowie übliche, die Vernetzung nicht katalysierende Zusatzstoffe, **dadurch gekennzeichnet, daß** sie Alkalimetallsalze von geradkettigen oder verzweigten, gesättigten, einfach- oder mehrfach ungesättigten, aliphatischen und/oder aromatischen Carbonsäuren nativen und/oder synthetischen Ursprungs als Katalysatoren enthalten.

2. Massen nach Anspruch 1, **dadurch gekennzeichnet, daß** die Alkalimetallkationen der Alkalimetallsalze ausgewählt sind aus Natrium oder Kalium.

3. Massen nach Anspruch 1, **dadurch gekennzeichnet, daß** die Carboxylatreste der Alkalimetallsalze der Carbonsäuren 3 bis 22 C-Atome aufweisen.

4. Massen gemäß Anspruch 1 bis 3, enthaltend 0,5 bis 2,0 Gew.-Teile, insbesondere 0,7 bis 1,5 Gew.-Teile Katalysator pro 100 Gew.-Teile Polymermischung.

## Claims

1. Low-temperature- or high-temperature-crosslinking compositions containing 1,3-butadiene-based polymers containing primary and/or secondary hydroxyl groups in addition to 1,3-butadiene-based polymers containing carboxylic acid groups and typical additives which do not catalyze the crosslinking reaction, **characterized in that** they contain alkali metal salts of linear or branched, saturated, mono- or polyunsaturated, aliphatic and/or aromatic carboxylic acids of native and/or synthetic origin as catalysts

2. Compositions as claimed in claim 1, **characterized in that** the alkali metal cations of the alkali metal salts are selected from sodium or potassium

3. Compositions as claimed in claim 1, **characterized in that** the carboxylate residues of the alkali metal salts of the carboxylic acids contain 3 to 22 carbon atoms.

4. Compositions as claimed in claims 1 to 3 containing 0.5 to 2.0 parts by weight and more particularly 0.7 to 1 5 parts by weight of catalyst per 100 parts by weight of polymer mixture.

## Revendications

1. Masses réticulables à froid ou à chaud, contenant des polymérisats porteurs de groupes hydroxyle primaire et/ou secondaire à base de 1,3-butadiène en plus de polymérisats porteurs de groupes acides carboxyliques à base de 1,3-butadiène, ainsi que des adjuvants usuels ne catalysant pas la réticulation, **caractérisées en ce qu'**elles contiennent des sels de métaux alcalins d'acides carboxyliques aliphatiques, linéaires ou ramifiés, saturés ou comportant une ou plusieurs insaturations, et/ou aromatiques, d'origine naturelle et/ou synthétique.

2. Masses selon la revendication 1, **caractérisées en ce que** les cations de métaux alcalins des sels de métaux alcalins sont choisis parmi le sodium ou le potassium.

3. Masses selon la revendication 1, **caractérisées en ce que** les groupes carboxylate des sels de métaux alcalins des acides carboxyliques comprennent de 3 à 22 atomes de C.

4. Masses selon les revendications 1 à 3, contenant de 0,5 à 2,0 parties en poids, en particulier de 0,7 à 1,5 parties en poids de catalyseur pour 100 parties en poids de mélange de polymères.
